# EUROPEAN PATENT APPLICATION

(11) **EP 2 042 788 A1**
(43) Date of publication of application: **01.04.2009**
(21) Application number: 08159052.3
(22) Date of filing: 25.06.2008
(51) Int. Cl.: F16J 15/32, F01D 11/04

(54) **Reduced pressure load finger seal assembly**

(30) Priority: 28.09.2007 US 864294
(71) Applicant: Honeywell International Inc., Morristown NJ 07960 (US)
(72) Inventor: Takeuchi, Donald I., Tempe, AZ 85282 (US); Tucker, Bradley R., Chandler, AZ 85226 (US); Wong, Yates Y., Dewey, AZ 86237 (US); Hwang, Mingfong F., Phoenix, AZ 85045 (US)
(74) Representative: Buckley, Guy Julian

(57) **Abstract**

A sealing assembly (10) for achieving a fluid seal between a rotatable shaft and a housing circumscribing the rotatable shaft to inhibit fluid leakage therebetween a high pressure fluid region and a relatively lower pressure fluid region. The sealing assembly includes at least one primary seal, comprising an axial stack of a plurality of diaphragm members (16), including an upstream diaphragm (22) and a downstream diaphragm (24). A plurality of finger seal plates (28) are positioned between the upstream diaphragm and the downstream diaphragm. The plurality of diaphragm members define a passageway in fluid communication with the high pressure fluid region (23) and a low pressure fluid region. The sealing assembly includes at least one secondary seal (50) positioned within the passageway and configured to convert fluid from a high pressure axial pressure balance to a low pressure axial pressure balance thereby reducing a radially inward pressure load.

## Description

This invention was made with Government support under funding program VAATE STF having Contract No. F3361503D2355 awarded by The US Air Force. The Government has certain rights in this invention.

### TECHNICAL FIELD

The present invention relates to an apparatus for achieving a fluid seal between rotatable and static members. More particularly, the present invention relates to an apparatus for achieving a fluid seal between a rotatable shaft and a housing circumscribing the rotatable shaft.

### BACKGROUND

Sealing between rotating and static components of a gas turbine engine is an important element in minimizing fuel burn and increasing power to weight ratio. Previous attempts at providing sealing members include brush seals wherein a plurality of elongate filaments or fibers are clustered together and secured to one of a pair of relatively movable members for sliding contact with another member. The resulting seal functions as a contact or tight-clearance seal by inhibiting fluid flow between the pair of relatively movable members. Prior art teaches that the brush seal may be made of metallic filaments or wire, for example, carried by one of the members and may be arranged as a radial or axial seal with a smooth or grooved engagement surface on the other of the pair of members.

While various types of contact or tight-clearance seals may be used in the bearing compartment region where relative motion between rotating and static members is small, labyrinth seals (also known as knife seals) are typically used elsewhere in the engine where larger relative displacements may be encountered. Labyrinth seals are well known for durability, reasonable cost and ability to operate at high surface speeds and pressure drops. However, they can be prone to degradation upon rubbing during maneuvers and transient power excursions and may thus operate at clearances which can result in unacceptable leakage.

Finger seal designs have been produced in order to accommodate the large rotor displacements during maneuver and power transients while maintaining control of leakage. Many of the early finger seal designs encountered hysteresis problems. Subsequent finger seal designs were pressure balanced to effectively eliminate the significant hysteresis seen in the early finger seal configurations. Continuation in the development of the finger seal design has revealed deficiencies that limit its potential application to commercial gas turbine engines. The addition of the axial pressurization circuit described in U.S. Patent No. 6,196,550 by Arora to alleviate seal hysteresis had the undesirable effect of radially loading the fingers into the rotating member. The magnitude of loading is proportional to the differential pressure across the seal.

Increasing demand on engine performance has resulted in higher differential pressures and increased radial finger loads. This has resulted in high heat generation, unacceptable finger contact temperatures and excessive, accelerated wear. As the engine transitions to a lower differential pressure operating condition, the radially inward force diminishes and the fingers retract to a new equilibrium position, leaving a clearance between the fingers and the rotating member. In view of the above, it is an object for this invention to provide a reduced pressure load (RPL) finger seal that minimizes undesirable radially loading of the fingers into the rotating member.

An undesirable aspect of the reduced pressure load finger seal design is an increase in axial pressure loading. Another object of the present invention is to provide a reduced pressure load finger seal which overcomes resistance to radial displacement of the fingers due to radial friction forces induced by the increase in axial loading. Hence, there is a need for a reduced pressure load finger seal that, in addition, provides for a reduction in axial pressure loading.

### BRIEF SUMMARY

There has now been developed a sealing assembly for disposition in cooperation with a body defining a bore and a shaft member rotatably received in the bore, and to inhibit fluid leakage between a high pressure fluid region and a relatively lower pressure fluid region.

In a first embodiment, by way of example only, the sealing assembly is comprised of at least one primary seal comprising an axial stack of a plurality of diaphragm members. The axial stack including an upstream diaphragm and a downstream diaphragm. A plurality of finger seal plates are sandwiched between the upstream diaphragm and the downstream diaphragm. The sealing assembly further comprised of a passageway formed in the axial stack of the plurality of diaphragm members and in fluid communication with the high pressure fluid region and the lower pressure fluid region. The passageway is comprised of at least one radial passage and at least one axial passage. The sealing assembly further comprised of at least one secondary seal positioned within the passageway and configured to convert fluid from a high pressure axial pressure balance to a low pressure axial pressure balance thereby reducing a radially inward pressure load.

In yet another embodiment, by way of example only, there is provided a sealing assembly comprised of an axial stack of a plurality of diaphragm members, the axial stack including an upstream diaphragm and a downstream diaphragm. A plurality of finger seal plates are sandwiched between the upstream diaphragm and the downstream diaphragm, wherein the plurality of finger seal plates include a circumferentially continuous band portion and a plurality of uniformly spaced and angulated integral finger portions extending radially inward from the circumferentially continuous band portion and circumscribing the shaft member. The sealing assembly is further comprised of a passageway formed in the axial stack of the plurality of diaphragm members and in fluid communication with the high pressure fluid region and the lower pressure fluid region, wherein the passageway is comprised of at least one radial passage and at least one axial passage. The sealing assembly is further comprised of at least one wire seal piston ring positioned within the passageway and configured to convert fluid from a high pressure axial pressure balance to a low pressure axial pressure balance thereby reducing a radially inward pressure load.

In a further embodiment, still by way of example only, there is provided a sealing assembly comprised of an axial stack of a plurality of diaphragm members, the axial stack including an upstream diaphragm and a downstream diaphragm. A plurality of finger seal plates are sandwiched between the upstream diaphragm and the downstream diaphragm. The sealing assembly is further comprised of a passageway formed in the axial stack of the plurality of diaphragm members and in fluid communication with the high pressure fluid region and the lower pressure fluid region, wherein the passageway is comprised of at least one radial passage and at least one axial passage. The sealing assembly further comprised of a wire seal piston ring positioned within the passageway and configured to convert fluid from a high pressure axial pressure balance to a low pressure axial pressure balance thereby reducing a radially inward pressure load.

Other independent features and advantages of the preferred apparatus will become apparent from the following detailed description, taken in conjunction with the accompanying drawings which illustrate, by way of example, the principles of the invention.

### BRIEF DESCRIPTION OF THE DRAWINGS

FIG. 1 is an enlarged fragmentary oblique sectional view of a pair of reduced pressure load seal assemblies as installed in a gas turbine engine;

FIG. 2 is an enlarged fragmentary oblique sectional view of the reduced pressure load seal assembly of FIG. 1;

FIG. 3 is a cross-section view of the reduced pressure load seal assembly and secondary flow circuit of FIG. 1;

FIG. 4 is an enlarged fragmentary sectional view of a portion of the seal assembly of FIG. 1;

FIGs. 5-8 are alternative embodiments of a secondary seal in the seal assembly;

FIG. 9 is a cross-section view of the reduced pressure load seal assembly incorporating an enhanced axial pressure balance circuit; and

FIG. 10 is a fragmentary oblique sectional view of the seal assembly and secondary flow circuits of FIG. 9.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention. In this regard, before proceeding with the detailed description, it is to be appreciated that the described embodiment is not limited to use in conjunction with a specific type of engine, such as a gas turbine engine. Thus, although the description is explicitly directed toward an embodiment that is used within a gas turbine engine, it should be appreciated that it can be used within any type of apparatus requiring a fluid seal between two rotatable members, including those known now or hereafter in the art.

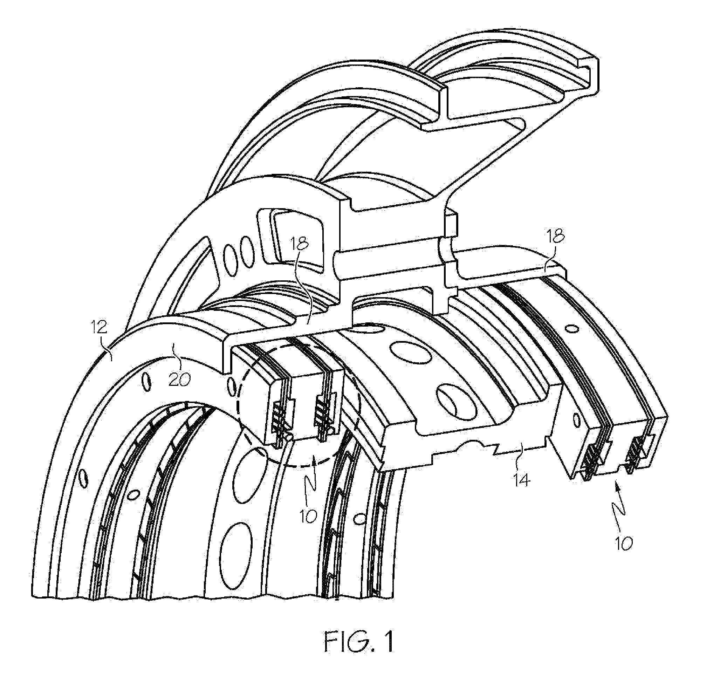

Viewing FIGS. 1-3 in conjunction, FIG. 1 shows a sealing assembly, comprised of a first reduced pressure load seal assembly and a second reduced pressure load seal assembly, each generally referenced 10, and configured as primary seals. For purposes of this disclosure, only one of the reduced pressure load seal assemblies will be described, the second reduced pressure load seal assembly being substantially identical in configuration. The reduced pressure load seal assembly 10 is illustrated as being disposed within a portion of a gas turbine engine. More specifically, the reduced pressure load seal assembly 10 is disposed within an annular housing 18 and a rotating member of the engine such as a rotatable shaft (not shown), to provide a fluid seal therebetween. The reduced pressure load seal assembly 10 defines a bore through which the rotatable shaft passes. The reduced pressure load seal assembly 10 encircles and contacts the rotatable shaft to provide a rotatable seal.

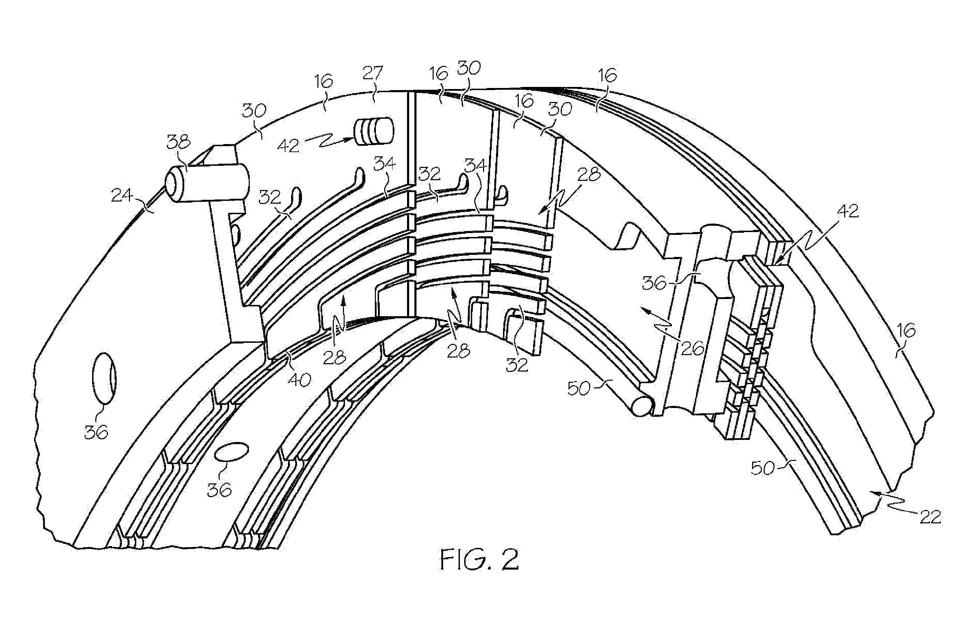

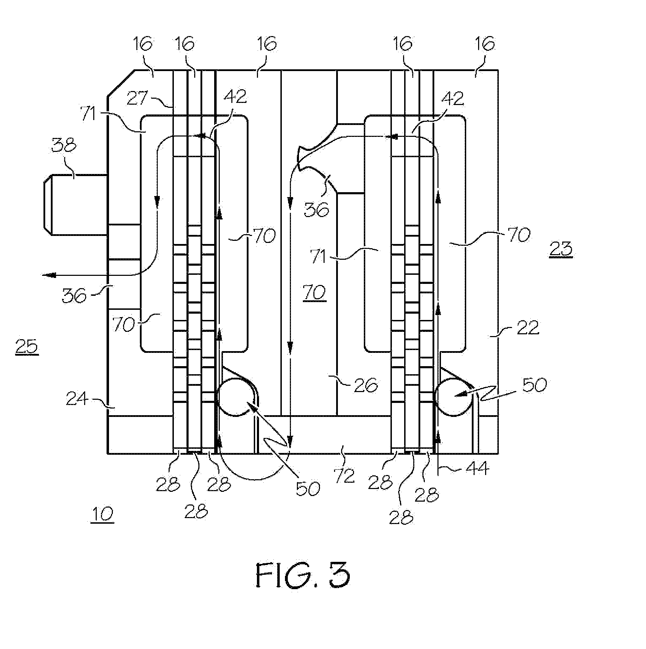

FIGs. 2 and 3 illustrate the reduced pressure load seal assembly 10 including an axial stack of a plurality of thin annular metallic diaphragm members 16. As best illustrated in FIG. 1, the annular housing 18 defines a seal retention flange 20 to aid in the positioning of the plurality of diaphragm members 16. The plurality of diaphragm members 16 each extend to and slidably engage the rotatable shaft member (not shown). As seen in FIGS. 2 and 3, each of the plurality of diaphragm members 16 includes an upstream diaphragm 22, a downstream diaphragm 24, and an intermediate diaphragm 26. The upstream diaphragm 22 is disposed in a high pressure fluid region 23 of the reduced pressure load seal assembly 10, while the downstream diaphragm 24 is in a low pressure fluid region 25. In addition, a plurality of finger seal plates 28 are positioned between the upstream diaphragm 22 and the intermediate diaphragm 26, and between the downstream diaphragm 24 and the intermediate diaphragm 26. It should be understood that in an alternative embodiment, the plurality of diaphragm members may not include an intermediate plate 26, and simply include an upstream diaphragm and a downstream diaphragm having the plurality of finger seal plates 28 disposed there between. Each of the plurality of diaphragm members 16 includes a circumferentially continuous band portion 30. Each of the plurality of finger seal plates 28 define an integral plurality of circumferentially uniformly arrayed finger portions 32. The finger portions 32 are comb-like and are circumferentially spaced apart to define a gap 34 between each finger portion 32. Typically, the gaps 34 are narrower than the finger portions 32. These finger portions 32 also extend radially and angularly in a single circumferential direction to define an angle. That is, the finger portions 32 extend radially inwardly from the circumferentially continuous band portion 30 generally like a comb toward the shaft with a left-hand or right-hand circumferential angulation. As seen in FIG. 2, the finger portions 32 have a left-hand angulation. However, in an alternate embodiment, the plurality of finger seal plates 28 may present finger portions 32 with a right-hand angulation. In their unrestrained positions, the end surfaces 40 of each of the finger portions 32 cooperatively define an inner diameter which is slightly less than the outer diameter of the rotatable shaft (not shown) positioned proximate thereto.

When the plurality of diaphragm members 16 are disposed about the rotatable shaft (not shown), each finger portion 32 is deflected slightly from its unrestrained position to lightly press an arcuate end surface 40 against an outer surface of the rotatable shaft. As is easily appreciated, when the rotatable shaft rotates leftwardly (counterclockwise, viewing FIG. 2), the tangential friction force at the end surface 40 provides a moment to finger portions 32 tending to decrease the perpendicular contact force between the end surface 40 and the surface of the rotatable shaft. Thus, the rotatable shaft is rotatable counterclockwise with the finger portions 32 maintaining a smooth sliding contact with the surface of the shaft. In this particular embodiment, should the shaft rotate clockwise, the frictional force adds to the perpendicular force. However, the tangential angle of the finger portions 32 is chosen in view of the bending strength of the finger portions 32 and the coefficient of friction at surfaces 40 and the surface of the rotatable shaft, so that a smooth sliding contact is maintained at all surfaces regardless of the direction of rotation of the rotatable shaft.

Referring more particularly to FIG. 3, to minimize or eliminate any hysteresis that may be present in the reduced pressure load seal assembly 10, an axial pressurization circuit creates an axial flow passage in fluid communication with the high pressure fluid region 23, intermediate pressure region 72, and the pressure regions 71 on the low pressure side of the plurality of diaphragm members 16. More specifically, as indicated by the arrows 44 in FIG. 3, when assembled and properly aligned, the plurality of diaphragm members 16 define a plurality of radial passages 70 and the plurality of axial passages 42. The plurality of axial passages 42 are formed through the plurality of diaphragm members 16 and provide an axial flow passage and fluidic communication between the high pressure fluid region 23, intermediate pressure region 72, and pressure regions 71 on the low pressure side of the plurality of finger seal plates 28.. The inclusion of this axial pressurization circuit, and more particularly axial flow passage, while alleviating seal hysteresis, has an undesirable effect of radially loading the finger portions 32 into the rotating rotatable shaft. The magnitude of the loading is proportional to the differential pressure across the reduced pressure load seal assembly 10. To overcome the increased radially induced pressure load, one or more secondary seals 50 are located in the reduced pressure load seal assembly 10 to convert the high pressure axial pressure balance to a low pressure axial pressure balance. In operation, air flow represented by arrow 44, is restricted to flow radially outward through the slots between the finger portions 32 in the first finger seal plate 28 due to the presence of the secondary seal 50, and subsequently between the upstream diaphragm 22 and a first finger seal plate 28. The secondary seal 50 reduces the high pressure air flow 44, as it passes around the secondary seal 50. The reduced pressure air flow 44 moves through the radial passages 70, between the upstream diaphragm 22 and a first finger plate 28, the plurality of axial passages 42 and the radial passage 70 in the intermediate diaphragm 26, exiting below the intermediate diaphragm 26. A plurality of balance pressure bleed ports 36 is provided in the reduced pressure load seal assembly 10 to permit adjustment of the axial balance pressure. During operation, the air flow 44 repeats this process (see FIG. 3) passing through an additional secondary seal and additional radial and axial passages, exiting through the slots in downstream diaphragm 24. The net axial force and radial force exerted on the reduced pressure sealing assembly 10 is greatly reduced when compared to prior art configurations that do not have pressure balancing passages or secondary seals.

Referring still to FIGs. 2 and 3, a plurality of bleed air holes 36, of which only two are illustrated, are formed in the downstream diaphragm 24 and the intermediate diaphragm 26 as a serial part of the plurality of axial passages 42. Bleed air holes 36 provide a means of adjusting the pressure level for the axial pressure balance circuit which is directly related to the radially inward finger loads. In addition, illustrated is a dowel pin 3 8 that protrudes through the plurality of diaphragm members 16 and the plurality of finger seal plates 28 to prevent relative rotation of the plurality of diaphragm members 16.

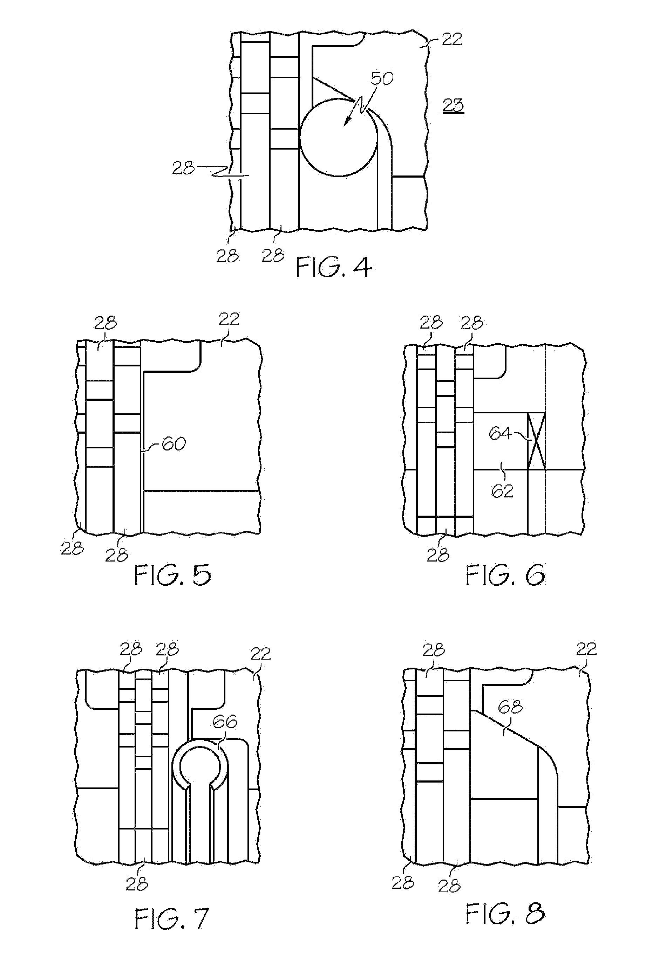

Illustrated in FIG. 4 is an enlarged sectional view of a portion of the reduced pressure load seal assembly 10 of FIG. 2, and more particularly the secondary seal 50. The secondary seal 50 has the effect of reducing the pressure at the high pressure fluid region 23, to a lower internal pressure resulting in a reduction of the radial inward pressure load on the plurality of finger seal plates 28, and more particularly the finger portions 32. In the interest of minimizing cost and the additional axial loading due to the presence of the secondary seal 50, in this particular embodiment a unique wire seal piston ring design as illustrated in FIG. 4 has been implemented which insures positive contact with the first finger seal plate 28 under low differential pressure conditions. More specifically, in this particular embodiment the secondary seal 50 is formed of a wire having a dimension of approximately .040". With appropriate control of the level of the balance pressure, the finger portions 32 can be adjusted to provide any desired value of radial finger loading against the rotating shaft. By combining the ability to control the radial pressure loading with the mechanical stiffness of the finger portions 32, design flexibility is achieved that is not currently available with brush seals and labyrinth seals when coping with large radial displacements of the rotating shaft relative to the stationary finger portions 32.

Referring now to FIGs. 5 through 8, illustrated are a plurality of alternative embodiments for the secondary seal 50. More specifically, as stated the secondary seal 50 may be any existing seal design commonly used in main shaft face seals. Illustrated in FIG. 5 is a secondary seal 60 formed by simply manufacturing the upstream diaphragm 22 and the plurality of finger seal plates 28 within close tolerances thereby reducing the flow therethrough. Illustrated in FIG. 6 is a secondary seal 62 formed by a piston ring and spring 64. Illustrated in FIG. 7 is a secondary seal 66 formed as a "C" seal and illustrated in FIG. 8 is a secondary seal 68 formed as a tapered piston ring.

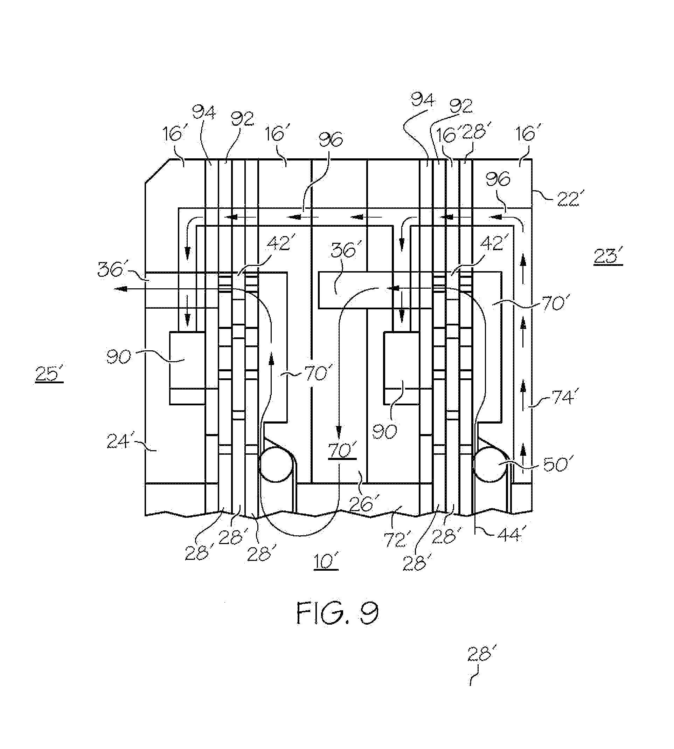

Referring now to FIGs. 9-10, illustrated is another embodiment of a reduced pressure load seal assembly, referred to using reference numeral 10' to indicate an alternative embodiment. It should be noted that all components of the reduced pressure load seal assembly of FIGs. 9-10 that are similar to the components illustrated in FIGs. 1-8, are designated with similar numbers, having a prime added to indicate the different embodiment.

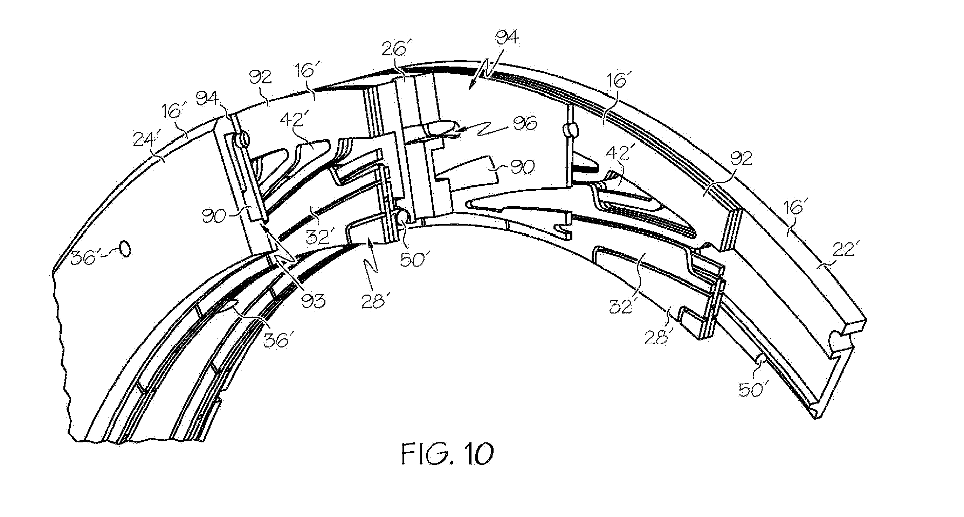

Similar to the first described embodiment, the reduced pressure load seal assembly 10' is positioned in combination with a similarly configured seal assembly relative to a plurality of rotating members. FIGs. 9 and 10 illustrate the reduced pressure load seal assembly 10' including a plurality of thin annular metallic diaphragm members 16'. As seen in FIGS. 9 and 10, the plurality of diaphragm members 16' include an upstream diaphragm 22', a downstream diaphragm 24', and an optional intermediate diaphragm 26' positioned therebetween. The upstream diaphragm 22' is disposed in a high pressure fluid region 23' of the reduced pressure load seal assembly 10', while the downstream diaphragm 24' is in a low pressure fluid region 25'. In addition, a plurality of finger seal plates 28' are positioned between the upstream diaphragm 22' and the intermediate diaphragm 26', and the downstream diaphragm 24' and the intermediate diaphragm 26'. Similar to the first described embodiment, each of the plurality of finger seal plates 28' define an integral plurality of circumferentially uniformly arrayed finger portions 32'.

Referring to FIGs. 9 and 10, as indicated by a diagrammed flow path 44', a plurality of axial passages 42' and radial passages 70' are formed through the plurality of diaphragm members 16' and provide an axial flow path and fluidic communication between the high pressure fluid region 23', intermediate pressure region 72', and the low pressure fluid region 25'. To overcome the increased radially induced pressure load, at least one secondary seal 50' is located in the reduced pressure load seal assembly 10' to reduce the radial pressure loading the finger seal portions 32' against the rotating shaft.

In contrast to the first embodiment, the reduced pressure load seal assembly 10' further includes an enhanced axial pressure balance to further reduce the axial pressure load that is present. The axial pressure load results in resistance to radial displacements of the finger portions 32' due to friction. This may result in excessive leakage due to the finger portions 32' inability to follow the displacements of the rotating shaft during maneuvers and power excursions. To overcome the radial friction force induced by the increased axial loading, a high pressure axial hydrostatic force is introduced in a sealed cavity 90 in this particular embodiment, on a downstream 92 finger seal plate 28'. High pressure air from the high pressure fluid region 23', or upstream side of the reduced pressure load seal assembly 10', is introduced directly onto the finger portions 32' of the downstream 92 finger seal plate 28'. The high pressure air flow 74 is fed to the sealed cavity 90 via a fluidic pressure passage 96 and introduced by an orifice plate 94 to the flat surfaces of the downstream finger portions 32'. This flow passage 96 is separated from flow passage 44' such that no fluid communication between passages can occur. The flow in passage 96 is metered such that should the axial hydrostatic force exceed the pressure loading, leakage is limited to an extremely small value. Under normal operation, the hydrostatic force is designed to be slightly less than the pressure loading such that the friction is minimized with virtually no leakage.

In order to form the plurality of diaphragm members 16 and 16' of the described embodiments, a laser cutting, wire EDM, or chemical photoetching process may be employed. In either case, manufacturing process may directly accept design information from a CAD/CAM system. The result is a reduced pressure load seal assembly which may be produced from design parameters and information in a short time and with very little or no specialized tooling.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A sealing assembly (10) for disposition in cooperation with a body defining a bore and a shaft member rotatably received in the bore, and to inhibit fluid leakage between a high pressure fluid region (23) and a relatively lower pressure fluid region (25), the sealing assembly (10) comprising:
at least one primary seal comprising an axial stack of a plurality of diaphragm members (16), the axial stack including an upstream diaphragm (22) and a downstream diaphragm (24), a plurality of finger seal plates (28) sandwiched between the upstream diaphragm (22) and the downstream diaphragm (24);
a passageway formed in the axial stack of the plurality of diaphragm members (16) and in fluid communication with the high pressure fluid region (23) and the lower pressure fluid region, wherein the passageway is comprised of at least one radial passage (70) and at least one axial passage (42); and
at least one secondary seal (50) positioned within the passageway and configured to convert fluid from a high pressure axial pressure balance to a low pressure axial pressure balance thereby reducing a radially inward pressure load.

2. The sealing assembly of Claim 1, wherein the at least one secondary seal (50) is formed by one of a wire seal ring, by positioning the finger seal plates in close tolerance, a piston ring and a spring (64), a "C" shaped seal, or a tapered piston ring.

3. The sealing assembly of Claim 2, wherein the wire seal ring is comprised of a 0.040" wire.

4. The sealing assembly of Claim 1, further including an intermediate diaphragm (26) positioned between the upstream diaphragm (22) and the downstream diaphragm (24), a first plurality of finger seal plates (28) sandwiched between the upstream diaphragm (22) and the intermediate diaphragm (26), and a second plurality of finger seal plates (28) sandwiched between the downstream diaphragm (24) and the intermediate diaphragm (26).

5. The sealing assembly of Claim 1, wherein the plurality of finger seal plates (28) include a circumferentially continuous band portion (30) and a plurality of uniformly spaced and angulated integral finger portions (32) extending radially inward from the circumferentially continuous band portion (30) and circumscribing the shaft member.

6. The sealing assembly of Claim 5, wherein each finger portion (32) being of substantially the same width and defining respective uniform gaps (34) between adjacent finger portions (32), an arcuate end edge surface (40) of each of the finger portions (32) sealingly and movably engaging the shaft member.

7. The sealing assembly of Claim 1, further including an annular housing (18) defining an annular portion and a seal retention flange (20) wherein a radially outer portion of each of the plurality of diaphragm members (16) is received therein.

8. A sealing assembly (10) for disposition in cooperation with a body defining a bore and a shaft member rotatably received in the bore, and to inhibit fluid leakage between a high pressure fluid region (23) and a relatively lower pressure fluid region(25), the sealing assembly (10) comprising:
an axial stack of a plurality of diaphragm members (16), the axial stack including an upstream diaphragm (22) and a downstream diaphragm (24), a plurality of finger seal plates (28) sandwiched between the upstream diaphragm (22) and the downstream diaphragm (24), wherein the plurality of finger seal plates (28) include a circumferentially continuous band portion (30) and a plurality of uniformly spaced and angulated integral finger portions (32) extending radially inward from the circumferentially continuous band portion (30) and circumscribing the shaft member;
a passageway formed in the axial stack of the plurality of diaphragm members (16) and in fluid communication with the high pressure fluid region (23) and the lower pressure fluid region (25), wherein the passageway is comprised of at least one radial passage (70) and at least one axial passage (42); and
at least one secondary seal (50) positioned within the passageway and configured to convert fluid from a high pressure axial pressure balance to a low pressure axial pressure balance thereby reducing a radially inward pressure load.

9. The sealing assembly of Claim 8, further including an intermediate diaphragm (26) positioned between the upstream diaphragm (22) and the downstream diaphragm (24), a first plurality of finger seal plates (28) sandwiched between the upstream diaphragm (22) and the intermediate diaphragm (26), and a second plurality of finger seal plates (28) sandwiched between the downstream diaphragm (24) and the intermediate diaphragm (26).

10. The sealing assembly of Claim 8, further including an annular housing (18) defining an annular portion and a seal retention flange (20) wherein a radially outer portion of each of the plurality of diaphragm members (16) is received therein.
